# EUROPÄISCHE PATENTANMELDUNG

(11) **EP 4 063 063 A1**
(43) Veröffentlichungstag der Anmeldung: **28.09.2022**
(21) Anmeldenummer: 22163228.4
(22) Anmeldetag: 21.03.2022
(51) Int. Cl.: B23P 19/06, F16B 37/06

(54) **EINPRESSVORRICHTUNG UND VERFAHREN ZUM EINBRINGEN EINES EINPRESSELEMENTES**

(30) Priorität: 22.03.2021 DE 102021106994
(71) Anmelder: Honsel Umformtechnik GmbH, 58730 Fröndenberg (DE)
(72) Erfinder: Weber, Gotthard, Regensburg (DE); Link, Nico, Ahlen (DE)
(74) Vertreter: Braun-Dullaeus Pannen Emmerling Patent- & Rechtsanwaltspartnerschaft mbB

(57) **Zusammenfassung**

Die Erfindung betrifft eine Einpressvorrichtung sowie ein Verfahren zum Einbringen eines Einpresselementes (34) in ein Werkstück (26) umfassend
• ein erstes Modul (12a), das auf einer ersten Seite des Werkstücks (26) vorgesehen ist, wobei das erste Modul (12a) aufweist:
∘ eine Zugeinheit (20) mit einem in Richtung des Werkstücks zeigenden und entlang seiner Achse verfahrbaren Zugstabs (32),
∘ einen Niederhalter (24), wobei der Niederhalter (24) die Zugeinheit (20)umschließt und ein Widerlager für das Werkstück (26) ausbildet;

• ein zweites Modul (12b), das auf der entgegengesetzten zweiten Seite des Werkstücks (26) vorgesehen ist, wobei das zweite Modul (12b) aufweist:
• eine Klemmvorrichtung (38) zum lösbaren Greifen des Zugstabes (32), wobei die Klemmvorrichtung ein Widerlager für das Einpresselement (34) ausbildet.

## Beschreibung

Die Erfindung betrifft eine Einpressvorrichtung sowie ein Verfahren zum Einbringen eines Einpresselements, wie beispielsweise einer Einpressmutter, in ein Werkstück. Das Einpresselement kann auch als Verbindungselement bezeichnet werden. Der Vorgang des Einpressens eines Verbindungselements ist beispielsweise ein Bestandteil einer Verarbeitungskette beim Fertigen von Fahrzeugen. Nachdem ein solches Verbindungselement in ein Werkstück, beispielsweise ein Blechteil, eingepresst wurde, kann dieses Blechteile mit anderen Blechteilen beispielsweise verschraubt werden. Durch das Einpressen wird ein Formschluss zwischen dem Einpresselement dem Werkstück hergestellt, der beispielsweise ohne Verschweißen auskommt, da sich das Werkstück beim Setzvorgang derart verformt, dass es formschlüssig in das Einpresselement eingreift. Typischerweise bestehen die Blechteile aus Materialien wie Stahl, Aluminium und/oder Magnesium.

Zum Einpressen der Einpresselemente werden heutzutage in der Praxis zumeist zwei verschiedene Vorrichtungen eingesetzt.

Zum einen existieren große unflexible Einpressstationen über sogenannte "C-Bügel" in unterschiedlichen Ausführungsform. Hierbei wird das Verbindungselement, also das Einpresselement, auf einer Seite des C-Bügels bereitgestellt und von der anderen Seite durch einen Antrieb mit hohem Druck eingepresst. Diese Systeme sind auch für hohe Einpresskräfte tauglich.

Zum anderen existieren kleinere Handanlagen zum Fügen von Blindnieten, zum Beispiel Blindnietmuttern. Hierbei wird typischerweise wie folgt verfahren: Der Gewindebolzen wird eingedreht, wobei anschließend über das Gewinde oder über einen Abreissbolzen so stark gezogen wird, dass der Fügevorgang von statten geht. Ersichtlicherweise sind hierbei die Fügekräfte aufgrund der Gewindetragkraft und der zu übertragenden Kraft durch den Abreissbolzen begrenzt. Insbesondere soll das Gewinde ja für spätere Montagevorgänge weiterverwendet werden und sollte deswegen nicht beschädigt werden.

Zwar können durch die Variante mit dem C-Bügel sehr hohe Fügekräfte übertragen werden, ohne beispielsweise ein Gewinde zu beschädigen, allerdings sind die C-Bügel aufgrund ihres großen Gewichts und ihres komplexen starren Aufbaus nur sehr unflexibel an bestimmten vordefinierten Stellen einsetzbar. Zudem eignen sich die C-Bügel typischerweise auch nur für bestimmte Werkstückgeometrien und sind für andere Werkstücke ungeeignet und müssen gegebenenfalls aufwendig angepasst oder ausgetauscht werden. Zudem sind herkömmliche C-Bügel sehr teuer.

Bei den zuvor beschriebenen Handanlagen sind nachteilig die Fügekräfte, wie vorstehend schon beschrieben, aufgrund der Gewindebelastbarkeit begrenzt und für Einpresselemente im Regelfall zu klein.

Es ist daher die Aufgabe der Erfindung eine Vorrichtung sowie ein Verfahren zum flexiblen Einbringen eines Einpresselements anzugeben.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Gelöst wird diese Aufgabe mit den Merkmalen der unabhängigen Ansprüche.

Erfindungsgemäß ist eine Einpressvorrichtung zum Einbringen eines Einpresselementes in ein Werkstück angegeben, wobei die Einpressvorrichtung umfasst:
- ein erstes Modul, das auf einer ersten Seite des Werkstücks vorgesehen ist, wobei das erste Modul aufweist:
   o eine Zugeinheit mit einem in Richtung des Werkstücks zeigenden und entlang seiner Achse verfahrbaren Zugstabs. Hierbei ragt der Zugstab in einer ausgefahrenen Position auf einer entgegengesetzten zweiten Seite des Werkstücks hinaus und ist in einer eingefahrenen Position, auch als Ausgangszustand bezeichnet, von der ersten Seite des Werkstücks beanstandet vorgesehen;
   ∘ einen Niederhalter, wobei der Niederhalter die Zugeinheit umschließt und ein Widerlager für das Werkstück ausbildet;
- ein zweites Modul, das auf der entgegengesetzten zweiten Seite des Werkstücks vorgesehen ist, wobei auf der zweiten Seite auch das Einpresselement auf einer Ausnehmung des Werkstücks anliegt. Bei der Ausnehmung des Werkstücks kann es sich insbesondere um eine lochförmige Bohrung handeln. Das zweite Modul weist auf:
   - eine, insbesondere koaxial zum Zugstab vorgesehene, Klemmvorrichtung zum lösbaren Greifen des Zugstabes, wobei die Klemmvorrichtung ein Widerlager für das Einpresselement ausbildet.

In vorteilhafter Weise ist die Einpressvorrichtung dergestalt eingerichtet, um ein manuelles Einpressen und/oder ein automatisiertes Einpressen des Einpresselements zu ermöglichen. Für den Fall des automatisierten Einpressens können zusätzliche Befestigungsvorrichtungen an der Einpressvorrichtung vorgesehen sein, sodass diese fest in einer Produktionskette montiert werden kann. Das erste Modul wird auch als Fügepistole bezeichnet.

Damit sich der Zugstab bei den während des Einpressvorgangs entstehenden Kräften nicht aus der Klemmvorrichtung löst, weist der Zugstab eine entsprechende Rauigkeitstiefe auf. Vorzugsweise ist der Zugstab aus einem hochfesten Material, wie beispielsweise CFK, gefertigt, um den entstehenden Kräften standhalten zu können.

Die Einpressvorrichtung ist also zweiteilig aufgebaut, nämlich durch das erste Modul und das zweite Modul. Das erste und das zweite Modul sind nicht fest miteinander verbunden, sondern haben nur dann miteinander eine feste lösbare Verbindung, wenn die Klemmvorrichtung des zweiten Moduls den Zugstab des ersten Moduls bei dem Einpressvorgang unter Zugkraft greift. Dieser zweiteilige Aufbau ermöglicht in vorteilhafter Weise eine Flexibilität der Einpressvorrichtung, die mit einem herkömmlichen C-Bügel nicht zu erreichen ist. Insbesondere existiert kein festes vertikal verlaufendes Bauteil, wie bei einem C-Bügel, dass die Geometrie des Werkstücks beim Einbringen zwischen das erste und das zweite Modul beeinträchtigt. Die Einpressvorrichtung ist also flexibel handhabbar und kann sogar aufgrund ihres geringen Gewichts manuell bedient werden.

Zudem wird die Kraft, die die erfindungsgemäße Einpressvorrichtung beim Einpressen auf das Verbindungselement ausüben kann, nicht durch eine Belastbarkeit eines Gewinnes des Einpresselements beschränkt, da der Zugstab an keinem Gewinde des Einpresselements eingreift, sondern von der Klemmvorrichtung fixiert wird. Die Kräfte auf das Werkstück und auf das Einpresselement, werden durch die beiden Widerlager ausgeübt.

In vorteilhafter Weise sind die Flächen der Widerlager so groß zu wählen, dass ein gleichförmiger Druck auf das Werkstück und auf das Einpresselemente erzeugt werden können. Auf der anderen Seite sollte insbesondere die Fläche des Widerlagers der Klemmvorrichtung nicht zu groß ausgebildet sein, da der erzeugte Einpressdruck umgekehrt proportional zu dieser Fläche ist. Im Idealfall entspricht die flächige Geometrie der Klemmvorrichtung der flächigen Geometrie des Einpresselements, das auf ihr anliegt.

Bevorzugt ist der Niederhalter koaxial um die Zugeinheit angeordnet. Dies bietet den Vorteil, dass die Kräfte zum Einpressen möglichst gleichmäßig auf das Einpresselement verteilt werden können, sodass dieses beim Einpressen in das Werkstück nicht verkantet.

In einer bevorzugten Ausführungsform ist der Niederhalter an der Zugeinheit fixiert. Dies bietet den Vorteil, dass die beim Einpressvorgang auf den Niederhalter wirkenden Kräfte effizient auf die Zugeinheit abgeführt werden kann, sodass keine zusätzliche Konstruktion zu Ableiten der Kräfte vorgesehen werden muss. Hierdurch wird insbesondere ermöglicht, dass das erste Modul als ein einschlägiges Bauteil ausgebildet werden kann, wodurch die Handhabbarkeit deutlich erhöht wird.

Vorzugsweise liegt der Niederhalter vor Beginn des Einpressvorgangs flächig auf dem Werkstück aufliegt. Dies bietet den Vorteil, dass das Werkstück, welches insbesondere ein flächiges Blechteil ist, bei den durch den Einpressvorgang entstehenden Kräfte, nicht verformt wird.

Zweckmäßig weist die Zugeinheit einen hydraulischen, hydropneumatischen oder elektrischen Antrieb aufweist, wobei dieser Antrieb fest mit dem Zugstab verbunden ist und diesen in axiale Richtung verfährt. Je nach Anwendungsgebiet kann es vorteilhaft sein einen anderen der genannten Antriebstypen auszuwählen. Beispielsweise kann mit dem elektrischen Antrieb auf einfache Weise das Ende des Einpressvorgangs durch einen sprunghaften Anstieg des Betriebsstroms detektiert werden.

In einer Ausführungsform steht die Klemmvorrichtung in eine Wirkverbindung mit einem weiteren Antrieb, insbesondere einem Pneumatikzylinder, wobei der Antrieb eingerichtet ist, die Klemmvorrichtung in eine offene und geschlossene Stellung zu verfahren. Hierdurch wird vorteilhaft ermöglicht, dass die Klemmvorrichtung des zweiten Moduls unabhängig von dem ersten Modul bedient werden kann.

In einer Ausführungsform bildet Klemmvorrichtung ein flächiges Widerlager für das Einpresselement aus, wobei die Fläche derart dimensioniert ist, dass das Einpresselement vollständig auf dem Widerlager aufliegt. Dies ermöglicht, dass die Klemmvorrichtung eine gleichförmige Kraft auf das Einpresselement ausüben. Im Idealfall entspricht die flächige Geometrie des Widerlagers der flächigen Geometrie des Einpresselements, sodass der gleichförmig erzeugte Druck maximiert wird. Insbesondere kann es hierbei zweckmäßig sein, dass verschiedene Aufsätze für die Klemmvorrichtung bereitgestellt werden, wobei ein jeder Aufsatz bezüglich seiner flächigen Geometrie an verschiedene Einpresselemente angepasst ist. Dies ermöglicht den Vorteil, dass die Einpressvorrichtung auf einfache Weise an verschiedene Einpresselemente angepasst werden kann.

Bevorzugt weist die Klemmvorrichtung Backen zum Klemmen des Zugstabs und eine Feder zum Vorspannen der Backen auf.

Gemäß einem weiteren Aspekt der Erfindung ist ein Verfahren zum Einbringen eines Einpresselementes in ein Werkstück mittels der erfindungsgemäßen Einpressvorrichtung angegeben, wobei das Verfahren folgende Schritte umfasst:
- Einbringen des Werkstücks, wobei das Werkstück eine Ausnehmung aufweist, zwischen das erste und zweite Modul in eine Position, sodass der Zugstab durch die Ausnehmung verfahrbar ist. Vorzugsweise ist die Ausnehmung als eine lochförmige Bohrung ausgebildet. Das Einpresselement liegt auf der zu dem zweiten Modul hingerichteten Seite des Werkstücks, also der zweiten Seite, an;
- Verfahren der Klemmvorrichtung, insbesondere durch den weiteren Antrieb, in eine offene Stellung, sodass der Zugstab in die Klemmvorrichtung einfahrbar ist;
- Ausfahren des Zugstabs beginnend von einer Ausgangsstellung, auch als Ausgangszustand bezeichnet, durch die Ausnehmung und durch das an der Ausnehmung anliegende Einpresselement in die Klemmvorrichtung;
- Verfahren der Klemmvorrichtung in eine geschlossene Stellung, wobei die Klemmvorrichtung den Zugstab in der geschlossenen Stellung rutschsicher fixiert;
- Zurückziehen des Zugstabs in Richtung des ersten Moduls bis das Einpresselement in das Werkstück eingepresst ist;
   o das Ende des Eintragsvorgangs kann beispielsweise durch einen Stromsensor und/oder ein Kraftsensor detektiert werden. Im Falle eines Stromsensors, der den zeitaufgelösten Betriebsstrom des Antriebs der Zugeinheit misst, deutet ein sprunghafter Anstieg des Betriebsstroms auf das Ende des Einpressvorgangs sind. In analoger Weise deutet ein sprunghafter Anstieg der gemessenen Kraft des Kraftsensors auf das Ende des Einpressvorgangs hin.
- Verfahren der Klemmvorrichtung in eine offene Stellung, wobei die Klemmvorrichtung den Zugstab in der offenen Stellung freigibt;
- Zurückfahren des Zugstabs in seine von der Ausnehmung beanstandete Ausgangsstellung.

In vorteilhafter Weise wird durch dieses Verfahren eine flexible, einfach handhabbare und kostengünstige Möglichkeit bereitgestellt Einpresselemente in Werkstücke, insbesondere flächige Bauteile aus Blech, Aluminium Stahl unterschiedliche oder Magnesium, einzubringen.

Bevorzugt läuft das Verfahren manuell oder automatisiert ab. Hierbei ermöglicht der manuelle Verfahrensablauf eine maximale Flexibilität des Verfahrens, wohingegen die Automatisierung eine möglichst hohe Stückzahl und gleichbleibende Vorgänge ermöglicht. Es ist auch möglich, dass das Verfahren teil automatisiert abläuft. Die nachfolgend aufgezählten Vorgänge können hierbei entweder manuell oder automatisiert ausgeführt werden.
- Das Verbindungselement, also das Einpresselement, ins besonders eine Einpressmutter, wird manuell oder automatisiert in die Fügeposition gebracht.
- Das zu bestückende Werkstück, zum Beispiel ein Blechteil, wird manuell oder automatisiert in die Fügeposition gebracht und über eine Spannvorrichtung gesichert.
- Das erste Modul, also die Fügepistole wird über die Fügestelle positioniert, entweder manuell von einem Arbeiter oder automatisiert über einen entsprechend programmierten Roboter.

Im Folgenden werden bevorzugte Ausführungsbeispiele der vorliegenden Erfindung unter Bezugnahme auf die begleitende Figur erläutert:
- Fig. 1:: zeigt eine Seitenansicht einer erfindungsgemäßen Einpressvorrichtung.
- Fig. 2:: zeigt einen Querschnitt entlang der Achse A der erfindungsgemäßen Einpressvorrichtung aus Fig. 1.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

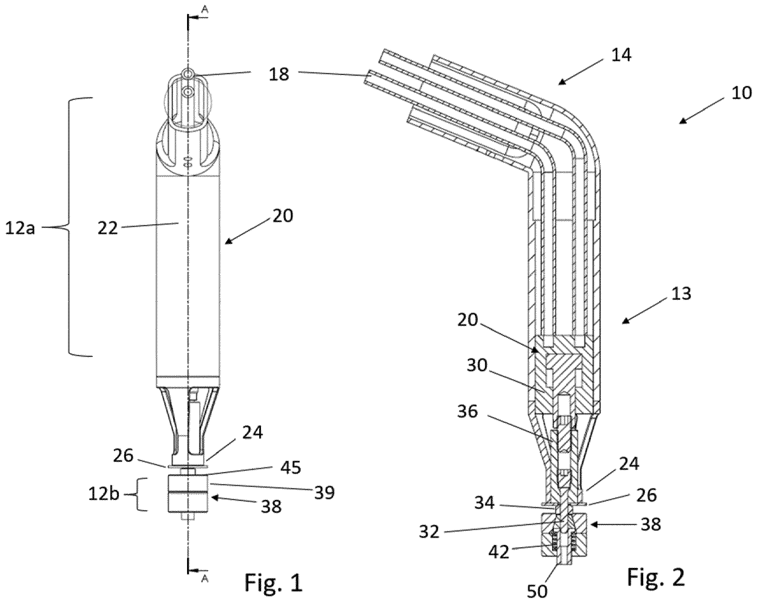

Fig. 1 eine Seitenansicht einer erfindungsgemäßen Einpressvorrichtung 10 und Fig. 2 zeigt einen Querschnitt entlang der Achse A der erfindungsgemäßen Einpressvorrichtung aus Fig. 1. Da in der Ansicht von Fig. 1 einige Bauteile der Einpressvorrichtung 10 verdeckt sind, nimmt die nachfolgende Beschreibung innerhalb eines einzigen Absatzes gegebenenfalls sowohl auf Fig. 1 als auch auf Fig. 2 Bezug, um eine möglichst zusammenhängende Beschreibung im Hinblick auf die konstruktiven Elemente der Einpressvorrichtung 10 zu ermöglichen.

Die erfindungsgemäße Einpressvorrichtung 10 umfasst ein erstes Modul 12a und ein zweites Modul 12b.

Das erste Modul 12a weist eine näherungsweise L-förmige Form auf, wobei eine längere Seite 13 der L-förmigen Form dem zweiten Modul 12b zugewandt ist, respektive diesem gegenübersteht. Die kürzere Seite 14 der L-förmigen Form knickt in einer Art ab, sodass diese als ein Handgriff der Einpressvorrichtung 10 verwendet werden kann.

Fig. 1 zeigt zudem Zuflüsse 18 für einen Hydraulikzylinder 20, der in dieser Ausführungsform als Zugeinheit 20 fungiert und in der Ansicht von Fig. 1 von einer Umhüllung 22 umgeben ist.

Die Umhüllung 22 ist vorzugsweise aus einem formstabilen Material hergestellt, sodass die Umhüllung 22 entstehende Kräfte des Einpressvorgangs effektiv ableiten kann, ohne hierbei Schaden zu nehmen. Mögliche Materialien die hierzu geeignet sind, sind dem Fachmann bekannt und können beispielsweise Aluminium, Stahl oder auch bestimmte Materialien aus Plastik sein.

Hierbei ist die Umhüllung 22 dazu vorgesehen Kräfte abzuleiten, die von einem Niederhalter 24 beim Einpressvorgangs aufgenommen werden, da der Niederhalter 24 als Widerlager für ein Werkstück 26 fungiert. Der Niederhalter 24 ist an dem in Richtung des zweiten Moduls 12b zeigenden Ende der Umhüllung 22 befestigt. Der Niederhalter 24 kann beispielsweise an die Umhüllung 22 angeschraubt sein. Der Niederhalter 24 ist hierbei so dimensioniert, dass er vor Beginn des Einpressvorgangs flächig auf dem Werkstück 26, welches vorliegend ein flaches Blechteil 26 ist, aufliegt.

Der Hydraulikzylinder 20 steht in eine Wirkverbindung 30 mit einem Zugstab 32, wobei der Zugstab 32 an dem dem zweiten Modul 12b zugewandten Ende des ersten Moduls 12a angeordnet ist und von dem Hydraulikzylinder 20 axial ausgehend von einer Ausgangsstellung aus dem ersten Modul 12a herausgefahren und wieder eingezogen werden kann. Vorzugsweise ist der Zugstab 32 zentral innerhalb des Niederhalters 24 angeordnet und von diesem umgeben. Zwischen dem Niederhalter 24 und dem Zugstab 32 kann zusätzlich eine Gleithülse 36 vorgesehen sein, innerhalb derer sich der Zugstab 32 bewegt. Die Gleithülse 36 wirkt zusätzlich als stabilisierende Element bezüglich radial wirkender Kräfte.

Das Werkstück 26 hat eine lochartige Bohrung auf der ein Einpresselemente 34 anliegt. Das Einpresselement 34 weist ebenfalls eine lochartige Bohrung, vorzugsweise mit einem Innengewinde versehen, auf. Das Einpresselement 34 kann also insbesondere eine Einpressmutter 24 sein. Liegen beide lochartige Bohrungen fluchtartig übereinander, befinden sich sowohl das Werkstück 26 als auch das Einpresselement 34 in der Fügeposition und der Zugstab 32 kann, angetrieben von dem Hydraulikzylinder 20, startend von einer Ausgangsstellung durch beide lochartige Bohrungen hindurchgeführt werden.

Das zweite Modul 12b weist eine Klemmvorrichtung 38 auf. Auf der dem ersten Modul 12a zugewandten Seite der Klemmvorrichtung 38, umfasst diese zwei oder drei Backen 40. Die äußere geometrische Form der Backen weist die Form eines Kegelstumpfs auf, wobei das Ende mit dem kleineren Radius in Richtung des ersten Moduls 12a zeigt. Die Backen 40 sind in einem entsprechenden kegelstumpfförmigen Hohlraum eines Ummantelungselements 39, der Klemmeinrichtung 38 verschieblich gelagert. Das Ummantelungselement 39 umgibt also die Backen 40 und bildet auch einen entsprechenden Anschlag der Backen 40 in Richtung des ersten Moduls 12a aus. Zudem bildet die außenliegende Fläche des Umwandlungselements 39 das Widerlager 45 für das Einpresselement 34 aus. Die Klemmvorrichtung 38 umfasst zudem ein Federsystem 42, wobei das Federsystem 42 die Backen 40 in Richtung des ersten Modul 12a kraftbeaufschlagt.

Wird also der Zugstab 32 in die Klemmvorrichtung 38 eingeführt, drückt dieser die Backen 40 entgegen der Federkraft auseinander, sodass sich der Abstand zwischen den Backen 40 vergrößert und der Zugstab 32 zwischen die Backen 40, angetrieben von dem Hydraulikzylinder 20, eingeschoben wird.

Zum Start des eigentlichen Einpressvorgangs zieht der Hydraulikzylinder 20 nun den Zugstab 32 wieder in Richtung seiner Ausgangsstellung zurück. Hierbei werden die Backen 40 wieder zusammengeschoben und fixieren durch die dadurch entstehenden Kräfte den Zugstab 32 innerhalb der Klemmvorrichtung 38. In der Folge entstehen die notwendigen Kräfte für den Einpressvorgang, die durch die beiden Widerlager auf das Werkstück 26 und auf das Einpresselement 34 übertragen werden, indem der Hydraulikzylinder 20 den Zugstab 32 weiter in Richtung seiner Ausgangsstellung zurückzieht. Der Einpressvorgangs wird vorzugsweise so lange fortgesetzt bis ein definiertes Abbruchkriterium erreicht ist.

Nachdem das Einpresselement 34 in das Werkstück 26 eingepresst ist, zieht eine an der Wirkverbindung 50 angebrachte Antriebseinheit (in den Figuren nicht dargestellt), beispielsweise ein Pneumatikzylinder, das Federsystem 42 in eine dem ersten Modul 12a entgegengesetzter Richtung, sodass das Federsystem 42 keine Vorspannung mehr auf die Backen 40 ausübt, sich die Backen hierdurch wieder auseinander bewegen, also nach außen weiten, und den Zugstab 32 freigeben, sodass dieser aus der Klemmvorrichtung 38 durch die beiden Bohrungen hindurch zurück in seiner Ausgangsstellung verfahren werden kann.

Das Werkstück 26 kann nun zusammen mit dem eingefügten Einpresselement 34 der Einpressvorrichtung 10 entnommen und weiterverarbeitet werden.

Vorzugsweise sind die Umhüllung 22, der Niederhalter 24, die Klemmvorrichtung, die Bohrungen des Einpresselements 34 und des Werkstücks, der Hydraulikzylinder 20 und/oder der Zugstab 32 koaxial zueinander angeordnet.

## Patentansprüche

1. Einpressvorrichtung zum Einbringen eines Einpresselementes in ein Werkstück umfassend
• ein erstes Modul (12a), das auf einer ersten Seite des Werkstücks (26) vorgesehen ist, wobei das erste Modul (12a) aufweist:
o eine Zugeinheit (20) mit einem in Richtung des Werkstücks (26) zeigenden und entlang seiner Achse verfahrbaren Zugstabs (32),
∘ einen Niederhalter (24), wobei der Niederhalter (24) die Zugeinheit (20) umschließt und ein Widerlager für das Werkstück (26) ausbildet;
• ein zweites Modul (12b), das auf der entgegengesetzten zweiten Seite des Werkstücks (26) vorgesehen ist, wobei das zweite Modul (12b) aufweist:
• eine Klemmvorrichtung (38) zum lösbaren Greifen des Zugstabes (32), wobei die Klemmvorrichtung (38) ein Widerlager (45) für das Einpresselement (34) ausbildet.

2. Einpressvorrichtung nach Anspruch 1, **dadurch gekennzeichnet, dass** der Niederhalter (24) koaxial um die Zugeinheit (20) angeordnet ist.

3. Einpressvorrichtung nach einem der vorhergehenden Ansprüche, **dadurch gekennzeichnet**, der Niederhalter (24) an der Zugeinheit (20) fixiert ist.

4. Einpressvorrichtung nach einem der vorhergehenden Ansprüche, **dadurch gekennzeichnet, dass** derart ausgestaltet ist, dass der Niederhalter (24) vor Beginn des Einpressvorgangs flächig auf dem Werkstück aufliegt.

5. Einpressvorrichtung nach einem der vorhergehenden Ansprüche, **dadurch gekennzeichnet, dass** die Zugeinheit (20) einen hydraulischen, hydropneumatischen oder elektrischen Antrieb aufweist.

6. Einpressvorrichtung nach einem der vorhergehenden Ansprüche, **dadurch gekennzeichnet, dass** die Klemmvorrichtung (38) in eine Wirkverbindung mit einem weiteren Antrieb steht, insbesondere einem Pneumatikzylinder, wobei der weitere Antrieb eingerichtet ist, die Klemmvorrichtung (38) in eine offene und geschlossene Stellung zu verfahren.

7. Einpressvorrichtung nach einem der vorhergehenden Ansprüche, **dadurch gekennzeichnet, dass** die Klemmvorrichtung (38) ein flächiges Widerlager für das Einpresselement (34) ausbildet, wobei die Fläche derart dimensioniert ist, dass das Einpresselement (34) vollständig auf dem Widerlager aufliegt.

8. Einpressvorrichtung nach einem der vorhergehenden Ansprüche, **dadurch gekennzeichnet, dass** die Klemmvorrichtung (38) Backen (40) zum Klemmen des Zugstabs (32) und eine Federvorrichtung (42) zum Vorspannen der Backen (40) aufweist.

9. Verfahren zum Einbringen eines Einpresselementes in ein Werkstück mit einer Einpressvorrichtung nach einem der Ansprüche 1-8, umfassen die folgenden Schritte:
• Einbringen eines Werkstücks (26) aufweisend eine Ausnehmung zwischen das erste und zweite Modul (12a, b) in eine Position, sodass der Zugstab (32) durch die Ausnehmung verfahrbar ist, wobei das Einpresselement (34) auf der zu dem zweiten Modul (12b) hingerichteten Seite des Werkstücks aufliegt;
• Verfahren der Klemmvorrichtung (38) in eine offene Stellung, sodass der Zugstab (32) in die Klemmvorrichtung (38) einfahrbar ist;
• Ausfahren des Zugstabs (32) aus einer Ausgangsstellung durch die Ausnehmungen des Werkstücks (26) und des Einpresselements (34) in die Klemmvorrichtung (38); wobei die Klemmvorrichtung (38) den Zugstab in einer geschlossenen Stellung der Klemmvorrichtung (38) rutschsicher fixiert;
• Zurückziehen des Zugstabs (32) in Richtung des ersten Moduls (12a) bis das Einpresselement (34) in das Werkstück (26) eingepresst ist;
• Verfahren der Klemmvorrichtung (38) in eine offene Stellung, wobei die Klemmvorrichtung (38) den Zugstab (32) in der offenen Stellung freigibt;
• Zurückfahren des Zugstabs (32) in seine von der Ausnehmung beanstandete Ausgangsstellung.

10. Verfahren nach Anspruch neun, **dadurch gekennzeichnet, dass** das Verfahren manuell oder automatisiert abläuft.
